(19) Europäisches Patentamt
European Patent Office
Office européen des brevets

(11) Veröffentlichungsnummer : **0 325 651 B1**

(12) # EUROPÄISCHE PATENTSCHRIFT

(45) Veröffentlichungstag der Patentschrift :
**18.09.91 Patentblatt 91/38**

(51) Int. Cl.$^5$ : **C07F 5/00**, C07F 5/06, C23C 16/18, C23C 16/20

(21) Anmeldenummer : **88907690.7**

(22) Anmeldetag : **26.07.88**

(86) Internationale Anmeldenummer :
**PCT/EP88/00674**

(87) Internationale Veröffentlichungsnummer :
**WO 89/01479 23.02.89 Gazette 89/05**

(54) **CYCLISCHE ODER BICYCLISCHE ALUMINIUM-, GALLIUM-, ODER INDIUM-ORGANISCHE VERBINDUNGEN UND IHRE VERWENDUNG ZUR GASPHASENABSCHEIDUNG DES METALLS AUF SUBSTRATEN.**

(30) Priorität : **08.08.87 DE 3726485**

(43) Veröffentlichungstag der Anmeldung :
**02.08.89 Patentblatt 89/31**

(45) Bekanntmachung des Hinweises auf die Patenterteilung :
**18.09.91 Patentblatt 91/38**

(84) Benannte Vertragsstaaten :
**AT CH DE FR GB IT LI NL SE**

(56) Entgegenhaltungen :
**EP-A- 0 108 469**
**EP-A- 0 260 534**
**WO-A-85/04405**
**GB-A- 2 123 422**
**Chemical Abstracts, vol.54, abstract no. 24346i (1960) Colubus, Ohio, US:L.I. ZAKHARIN and L.A. SAVINA: "Preparation and properties of some inner complex organo-aluminium compounds" & Izvest.Akad.Nauk. S.S.S.R., Otdel. KHIM. NAUK 1960, 1039-43**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **HOSTALEK, Martin**
**Menzelweg 7**
**W-6100 Darmstadt (DE)**
Erfinder : **POHL, Ludwig**
**Niebergallweg 5**
**W-6100 Darmstadt (DE)**
Erfinder : **ERDMANN, Dietrich**
**Heideweg 4**
**W-6109 Mühltal (DE)**
Erfinder : **SCHUMANN, Herbert**
**Weberstrasse 3**
**W-1000 Berlin 49 (DE)**
Erfinder : **HARTMANN, Uwe**
**Alt Tegel 33**
**W-1000 Berlin 20 (DE)**
Erfinder : **HEYEN, Meino**
**Schurzelter Mühle 61**
**W-5100 Aachen (DE)**
Erfinder : **JÜRGENSEN, Holger**
**Melatenerstrasse 56**
**W-5100 Aachen (DE)**

**EP 0 325 651 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft metallorganische Verbindungen, die Aluminium, Gallium oder Indium als Metalle enthalten und eine cyclische oder bicyclische Struktur aufweisen sowie die Verwendung dieser Verbindungen für die Herstellung dünner Filme oder epitaktischer Schichten durch Gasphasenabscheidung.

Die Abscheidung solcher Schichten aus entweder reinen Elementen der III. Gruppe oder aus Kombinationen mit anderen Elementen wie z.B. Galliumarsenid, Indiumphosphid oder Galliumphosphid, kann zur Herstellung von elektronischen und optoelektronischen Schaltelementen, Verbindungshalbleitern und Lasern verwendet werden. Die Abscheidung dieser Schichten erfolgt aus der Gasphase.

Die Eigenschaften dieser Filme hängen von den Abscheidungsbedingungen und der chemischen Zusammensetzung des abgeschiedenen Films ab.

Für die Abscheidung aus der Gasphase kommen alle bekannten Methoden wie die Metal-Organic Chemical Vapour Deposition Methode (MOCVD), die Photo-Metal-Organic Vapour Phase Methode (Photo-MOVP), bei welcher die Substanzen durch UV-Bestrahlung zersetzt werden, die Laser Chemical Vapour Deposition (Laser CVD) Methode oder die Metal-Organic Magnetron Sputtering Methode (MOMS) in Frage. Die Vorteile gegenüber anderen Methoden sind ein kontrollierbares Schichtenwachstum, eine genaue Dotierungskontrolle sowie eine aufgrund der Normal- oder Niederdruckbedingungen einfache Handhabung und Produktionsfreundlichkeit.

Bei der MOCVD-Methode werden metallorganische Verbindungen eingesetzt, die sich unter Abscheidung des Metalls bei einer Temperatur unterhalb 1100°C zersetzen. Typische Apparaturen, die zur Zeit für MOCVD benutzt werden, bestehen aus einem "bubbler" mit einer Zufuhr für die metallorganische Komponente, einer Reaktionskammer, die das zu beschichtende Substrat enthält sowie einer Quelle für ein Trägergas, das gegen die metallorganische Komponente inert sein soll. Der "bubbler" wird auf einer konstanten, relativ niedrigen Temperatur gehalten, die vorzugsweise über dem Schmelzpunkt der metallorganischen Verbindung, aber weit unterhalb der Zersetzungstemperatur liegt. Die Reaktions- oder Zersetzungskammer hat vorzugsweise eine sehr viel höhere Temperatur, die unterhalb 1100°C liegt, bei welcher die metallorganische Verbindung sich vollständig zersetzt und das Metall abgeschieden wird. Durch das Trägergas wird die metallorganische Verbindung in den Dampfzustand gebracht und mit dem Trägergas in die Zersetzungskammer geschleust. Der Massenfluß des Dampfes ist gut zu kontrollieren, und somit ist auch ein kontrolliertes Wachsen der dünnen Schichten möglich.

Bislang wurden für die Gasphasenabscheidung hauptsächlich Metallalkyle wie z.B. Trimethylgallium, Trimethylaluminium oder Trimethylindium verwendet. Diese Verbindungen sind jedoch extrem luftempfindlich, selbstentzündlich und teilweise bereits bei Raumtemperatur zersetzlich. Daher sind für die Herstellung, den Transport, die Lagerung und die Anwendung dieser Verbindungen aufwendige Vorsichtsmaßnahmen notwendig. Es sind auch einige, etwas stabilere Addukte der Metallalkyle mit Lewisbasen wie z.B. Trimethylamin und Triphenylphosphin bekannt (z.B. beschrieben in GB 2123422, EP-A 108469 oder EP-A 176537), die jedoch aufgrund des geringen Dampfdruckes nur bedingt für die Gasphasenabscheidung geeignet sind.

Die prioritätsältere aber nicht vorveröffentlichte EP-A-0260543 beschreibt die Verwendung von metallorganischen Verbindungen, die Aluminium, Indium oder Gallium als Metall und ein Heteroatom aus der 5. Hauptgruppe enthalten, wobei Metall- und Heteroatom durch ein Brückenglied, bestehend aus 2 bis 5 C-Atomen, miteinander verbunden sind, zür Herstellung dünner Filme und epitaktischer Schichten durch Gasphasenabscheidung.

Aufgabe der vorliegenden Erfindung war es nun, Metallalkylverbindungen zu finden, die einfach handhabbar und bei Raumtemperatur stabil sind und die sich aus der Gasphase zersetzen lassen, also für die verschiedenen Methoden der Gasphasenabscheidung geeignet sind.

Es wurde nun gefunden, daß sich die intramolekular stabilisierten Verbindungen von Aluminium, Indium und Gallium, die eine cyclische oder auch bicyclische Struktur aufweisen, durch eine hohe Stabilität gegenüber Luft und Sauerstoff auszeichnen, daher einfach zu handhaben sind und sich hervorragend für die Gasphasenabscheidung eignen.

Gegenstand der Erfindung sind somit die metallorganische Verbindung der Formel I

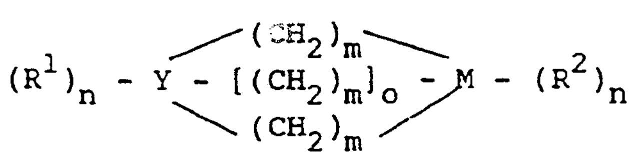

I

worin

| | |
|---|---|
| $R^1$ und $R^2$ | jeweils unabhängig voneinander H, eine geradkettige oder verzweigte Alkylgruppe mit bis zu 7 C-Atomen, die teilweise oder vollständig fluoriert sein kann, eine Cycloalkyl-, Alkenyl- oder Cycloalkenylgruppe mit jeweils 3-8 C-Atomen oder eine Phenylgruppe, |
| M | Al, In oder Ga, |
| Y | N, P, As oder Sb, |
| m | 2, 3 oder 4, |
| n und o | jeweils 0 oder 1 |
| und | |
| n + o | 1 |

bedeutet.

Ferner ist Gegenstand der Erfindung die Verwendung der Verbindungen der Formel I zur Gasphasenabscheidung sowie ein Verfahren zur Herstellung dünner Filme oder epitaktischer Schichten durch Gasphasenabscheidung des Metalls aus metallorganischen Verbindungen, bei welchem als metallorganische Substanzen die Verbindungen der Formel I eingesetzt werden.

Die Verbindungen der Formel I weisen eine cyclische oder bicyclische Struktur auf und sind intramolekular stabilisiert durch Elektronenübertragung von dem innerständigen Stickstoff-, Phosphor-, Arsen- oder Antimonatom auf das elektronenarme IIIB-Element. Sie besitzen daher eine im Vergleich zu den bisher verwendeten freien Metallalkylen hohe Stabilität gegenüber Luft und Sauerstoff. Sie sind nicht mehr selbstentzündlich und damit einfach zu handhaben. In der Gasphase jedoch lassen sich diese Verbindungen leicht unter Abscheidung des Metalls zersetzen.

In Formel I bedeutet M Gallium, Aluminium oder Indium. Vorzugsweise bedeutet M Gallium oder Aluminium. Y ist vorzugsweise Stickstoff, Phosphor oder Arsen, insbesondere bevorzugt ist Stickstoff.

m in den $(CH_2)_m$-Gruppen kann unabhängig voneinander 2, 3 oder 4 bedeuten. Vorzugsweise ist m 2 oder 3, und vorzugsweise hat m in den $(CH_2)_m$-Gruppen die gleiche Bedeutung.

n und o können jeweils 0 oder 1 sein, mit n + o = 1. Bevorzugt ist n = 1 und o = 0.

Die Reste $R^1$ und/oder $R^2$ in Formel I können jeweils eine geradkettige oder verzweigte Alkylgruppe mit bis zu 7 C-Atomen bedeuten, bevorzugt mit 1-4 C-Atomen. Sie bedeuten demnach bevorzugt Methyl, Ethyl, Propyl, Butyl, iso-Propyl, sek.-Butyl, tert.-Butyl, aber auch Pentyl, Hexyl, Heptyl, 2-Methylpentyl, 3-Methylpentyl oder 2-Heptyl. Die Alkylreste können teilweise oder auch vollständig fluoriert sein und z.B. Monofluormethyl, Trifluormethyl, Difluorethyl, Trifluorethyl, Pentafluorethyl oder Trifluorpropyl bedeuten.

Falls $R^1$ und/oder $R^2$ eine Cycloalkyl- oder Cycloalkenylgruppe bedeuten, so stellen sie vorzugsweise Cyclopentyl, Cyclohexyl oder Cyclohexenyl dar. $R^1$ und $R^2$ können auch Alkenylgruppen mit 3-8 C-Atomen sein, also z.B. Propenyl, Butenyl, Pentenyl, Hexenyl, Heptenyl oder Allyl. Falls $R^1$ und/oder $R^2$ eine Phenylgruppe bedeutet, so ist diese bevorzugt unsubstituiert, sie kann aber auch substituiert vorliegen. Da diese Substituenten keinen wesentlichen Einfluß auf den angestrebten Verwendungszweck ausüben, sind alle Substituenten erlaubt, die keinen störenden Einfluß auf die Zersetzungsreaktion haben.

Folgende Verbindungen stellen eine kleinere Gruppe von bevorzugten Verbindungen der Formel I dar:

1,5-Dimethyl-1-galla-5-aza-cyclooctan
1,5-Diethyl-1-galla-5-aza-cyclooctan
1,5-Dipropyl-1-galla-5-aza-cyclooctan
1,5-Dimethyl-1-alumina-5-aza-cyclooctan
1,5-Diethyl-1-alumina-5-aza-cyclooctan
1,5-Diisopropyl-1-alumina-5-aza-cyclooctan
1,5-Dibutyl-1-alumina-5-aza-cyclooctan
1-Methyl-5-ethyl-1-galla-5-aza-cyclooctan
1-Ethyl-5-methyl-1-alumina-5-aza-cyclooctan
1-Cyclohexyl-5-methyl-1-galla-5-aza-cyclooctan
1,6-Dimethyl-1-galla-6-aza-cyclodecan
1,6-Dimethyl-1-alumina-6-aza-cyclodecan
1,6-Diethyl-1-galla-6-aza-cyclodecan
1-Phenyl-5-methyl-1-galla-5-aza-cyclooctan
1,4-Dimethyl-1-galla-4-aza-cyclohexan
1,6-Diethyl-1-alumina-6-aza-cyclodecan
1-Galla-5-aza-bicyclo(3.3.3)-undecan
1-Galla-4-aza-bicyclo(2.2.2)-octan

1-Alumina-5-aza-bicyclo(3.3.3)-undecan
1-Alumina-4-aza-bicyclo(2.2.2)-octan
1-Methyl-5-cyclohexyl-1-galla-5-aza-cyclooctan
1-Methyl-5-phenyl-1-galla-5-aza-cyclooctan
1-Ethyl-5-phenyl-1-alumina-5-aza-cyclooctan
1-Galla-6-aza-bicyclo-(4.4.4)-tetradecan
1-Alumina-6-aza-bicyclo-(4.4.4)-tetradecan
1,5-Dimethyl-1-inda-5-aza-cyclooctan
1,5-Diethyl-1-inda-5-aza-cyclooctan
1,5-Dipropyl-1-inda-5-aza-cyclooctan
1,5-Diisopropyl-1-inda-5-aza-cyclooctan
1,5-Dibutyl-1-inda-5-aza-cyclooctan
1-Methyl-5-ethyl-1-inda-5-aza-cyclooctan
1-Ethyl-5-propyl-1-inda-5-aza-cyclooctan
1-Cyclohexyl-5-methyl-1-inda-5-aza-cyclooctan
1,6-Dimethyl-1-inda-6-aza-cyclodecan
1,6-Diethyl-1-inda-6-aza-cyclodecan
1-Phenyl-5-methyl-1-inda-5-aza-cyclooctan
1,4-Dimethyl-1-inda-4-aza-cyclohexan
1-Inda-5-aza-bicyclo(3.3.3)-undecan
1-Inda-4-aza-bicyclo(2.2.2)-octan
1-Methyl-5-cyclohexyl-1-inda-5-aza-cyclooctan
1-Methyl-5-phenyl-1-inda-5-aza-cyclooctan
1-Inda-6-aza-bicyclo(4.4.4)-tetradecan.

Die Verbindungen der Formel I sind hervorragend für die MOCVD-Epitaxie bzw. MOCVD-Methode geeignet, da sie sich bei höheren Temperaturen unter Freisetzung des entsprechenden Metalles zersetzen. Sie sind ebenfalls für die anderen Methoden der Gasphasenabscheidung wie Photo-MOVP, Laser CVD oder MOMS geeignet.

Die Verbindungen der Formel I werden nach an sich bekannten Methoden hergestellt, wie sie in der Literatur (z.B. G. Bähr, P. Burba, Methoden der Organischen Chemie, Bd. XIII/4, Georg Thieme Verlag, Stuttgart (1970)) beschrieben sind, und zwar unter Reaktionsbedingungen, die für die genannten Umsetzungen bekannt und geeignet sind. Dabei kann man auch von an sich bekannten, hier nicht erwähnten Varianten Gebrauch machen.

So können Verbindungen der Formel I z.B. hergestellt werden, indem man Metallalkylchloride mit einem Alkalimetallorganyl der entsprechenden Lewisbase oder einer Grignard-Verbindung in einem inerten Lösungsmittel umsetzt.

Die Umsetzungen erfolgen vorzugsweise in inerten Lösungsmitteln. Als Lösungsmittel kommen dabei alle diejenigen in Frage, die die Umsetzung nicht stören und nicht in das Reaktionsgeschehen eingreifen, wie beispielsweise Diethylether oder Tetrahydrofuran. Die Reaktionstemperaturen entsprechen im wesentlichen denen, die aus der Literatur für die Herstellung ähnlicher Verbindungen bekannt sind.

Beim erfindungsgemäßen Verfahren zur Herstellung dünner Filme oder epitaktischer Schichten auf beliebigen Substraten setzt man bei den an sich bekannten Gasphasenabscheidungs-Prozessen von metallorganischen Verbindungen als Ausgangsverbindungen die intramolekular stabilisierten, metallorganischen Verbindungen der Formel I ein.

Zur Herstellung von Verbindungshalbleitern werden beim erfindungsgemäßen Verfahren während des Abscheidungsprozesses in der Zersetzungskammer eine oder mehrere unter den angewandten Reaktionsbedingungen gasförmige Verbindungen des Arsens, Antimons oder Phosphors, beispielsweise $AsH_3$, $AsMe_3$, $PH_3$ oder $SbH_3$,zugesetzt.

Eine weitere Variante des erfindungsgemäßen Verfahrens besteht darin, daß man während des Abscheidungsprozesses zusätzlich zu den erfindungsgemäßen metallorganischen Verbindungen der Formel I Dotierstoffe zusetzt. Als Dotierstoffe werden dabei flüchtige metallorganische Verbindungen wie beispielsweise flüchtige metallorganische Verbindungen von Eisen, Magnesium, Zink oder Chrom eingesetzt. Als bevorzugte Verbindungen gelten dabei z.B. $Zn(CH_3)_2$, $Mg(CH_3)_2$ oder $Fe(C_5H_5)_2$.

Die nach den erfindungsgemäßen Verfahren hergestellten Schichten können verwendet werden für die Herstellung von elektronischen und optoelektronischen Schaltelementen, Verbindungshalbleitern oder Lasern.

Da bei den momentan im Einsatz befindlichen Epitaxieanlagen aus thermodynamischen Gründen nur ca. 1% der eingesetzten freien Metallalkyle als Epitaxieschicht auf dem Substrat abgeschieden werden kann, stellt die Vernichtung der überschüssigen Metallalkyle, die aufgrund ihrer extremen Empfindlichkeit nicht zurückgewonnen werden können, ein erhebliches Problem dar.

Die erfindungsgemäßen Verbindungen nach Formel I eröffnen dagegen aufgrund ihrer hohen Stabilität neue Möglichkeiten zur gefahrlosen Vernichtung oder zur Rückgewinnung der wertvollen IIIB-Verbindungen.

Die folgenden Beispiele sollen die Erfindung näher erläutern. Temperaturangaben erfolgen immer in Grad Celsius. Fp. bedeutet Schmelzpunkt und Kp. Siedepunkt.

A : Herstellung der metallorganischen Verbindungen :

Beispiel 1

2,9 g (119 mmol) Magnesiumgrieß werden in 100 ml THF vorgelegt und unter Rückfluß erwärmt. Es werden 10 g (54 mmol) Methylamino-bis-(3,3'-propylchlorid), gelöst in 40 ml THF, zugegeben. Anschließend erwärmt man noch 2 Stunden unter Rückfluß.

Zu der Grignard-Lösung werden bei Raumtemperatur 7,8 g (50 mmol) Methylgalliumdichlorid in 20 ml THF gegeben. Man rührt 24 Stunden bei Raumtemperatur und erhitzt dann 3 Stunden unter Rückfluß. Man dekantiert von ausgefallenem $MgCl_2$ und erhält nach Abziehen des Lösungsmittels 1,5-Dimethyl-1-galla-5-aza-cyclooctan durch Vakuumdestillation als weißen Feststoff mit Fp. 34° und Kp. 83°/12 Torr.

Analog werden hergestellt :

1,5-Diethyl-1-galla-5-aza-cyclooctan
1,5-Dipropyl-1-galla-5-aza-cyclooctan
1,5-Diisopropyl-1-galla-5-aza-cyclooctan
1,5-Di-n-butyl-1-galla-5-aza-cyclooctan
1,5-Di-isobutyl-1-galla-5-aza-cyclooctan
1,5-Di-tert.butyl-1-galla-5-aza-cyclooctan
1,6-Dimethyl-1-galla-6-aza-cyclodecan
1,6-Diethyl-1-galla-6-aza-cyclodecan
1,6-Dipropyl-1-galla-6-aza-cyclodecan
1,6-Diisopropyl-1-galla-6-aza-cyclodecan
1,6-Dibutyl-1-galla-6-aza-cyclodecan
1,6-Di-tert.butyl-1-galla-6-aza-cyclodecan
1,6-Di-isobutyl-1-galla-6-aza-cyclodecan
1,4-Dimethyl-1-galla-4-aza-cyclohexan
1,4-Diethyl-1-galla-4-aza-cyclohexan
1,4-Dipropyl-1-galla-4-aza-cyclohexan
1,4-Diisopropyl-1-galla-4-aza-cyclohexan
1,4-Dibutyl-1-galla-4-aza-cyclohexan
1,4-Di-isobutyl-1-galla-4-aza-cyclohexan
1,4-Di-tert.butyl-1-galla-4-aza-cyclohexan
1-Methyl-5-ethyl-1-galla-5-aza-cyclooctan
1-Methyl-5-propyl-1-galla-5-aza-cyclooctan
1-Propyl-5-methyl-1-galla-5-aza-cyclooctan
1-Ethyl-5-methyl-1-galla-5-aza-cyclooctan
1-Ethyl-6-propyl-1-galla-6-aza-cyclodecan
1-Propyl-6-butyl-1-galla-6-aza-cyclodecan
1-Methyl-6-ethyl-1-galla-6-aza-cyclodecan
1-Methyl-4-ethyl-1-galla-4-aza-cyclohexan
1-Propyl-4-methyl-1-galla-4-aza-cyclohexan
1-Ethyl-4-butyl-1-galla-4-aza-cyclohexan

Beispiel 2

3,6 g (148 mmol) Magnesiumgrieß werden in 100 ml THF vorgelegt und unter Rückfluß erwärmt. Es werden 12 g (49 mmol) 3-Chlor-N,N-bis-(3-chlorpropyl)-1-propanamin in 40 ml THF zugegeben, und man erhitzt noch 2 Stunden.

Zu der Grignard-Lösung werden bei Raumtemperatur 8,2 g (47 mmol) Galliumtrichlorid in 20 ml THF gegeben. Man rührt 24 Stunden bei Raumtemperatur und erhitzt dann 4 Stunden unter Rückfluß. Man erhält 1-Galla-5-azabicyclo(3.3.3)-undecan nach Abdestillieren des Lösungsmittels und Reinigung durch Vakuumdestillation.

Analog werden hergestellt:
1-Galla-6-aza-bicyclo(4.4.4)tetradecan
1-Galla-4-aza-bicyclo(2.2.2)octan.

B : Anwendung zur Herstellung dünner Filme

Beispiel 3

1,5-Dimethyl-1-galla-5-aza-cyclooctan (dargestellt nach Beispiel 1) wird in den bubbler gefüllt und mit der Gaszufuhr des inerten Gases und der Zersetzungskammer verbunden. Abhängig vom Partialdampfdruck des Reagenzes im Reaktor erfolgt eine Zersetzung unter Galliumabscheidung bei Temperaturen von ca. 700°.

## Patentansprüche

1. Metallorganische Verbindungen der Formel I

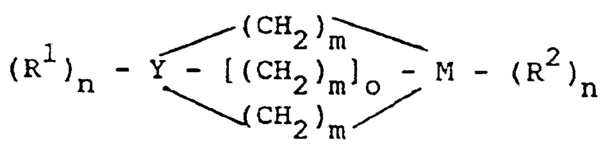

I

worin

| | |
|---|---|
| $R^1$ und $R^2$ | jeweils unabhängig voneinander H, eine geradkettige oder verzweigte Alkylgruppe mit bis zu 7 C-Atomen, die teilweise oder vollständig fluoriert sein kann, eine Cycloalkyl-, Alkenyl- oder Cycloalkenylgruppe mit jeweils 3-8 C-Atomen oder eine Phenylgruppe, |
| M | Al, In oder Ga, |
| Y | N, P, As oder Sb, |
| m | 2, 3 oder 4, |
| n und o | jeweils 0 oder 1 |
| und | |
| n + o | 1 |

bedeutet.

2. Verwendung der metallorganischen Verbindungen der Formel I nach Anspruch 1 zur Gasphasenabscheidung des Metalls auf Substraten.

3. Verwendung der metallorganischen Verbindungen der Formel I nach Anspruch 1 zur Abscheidung epitaktischer Schichten.

4. Verfahren zur Herstellung dünner Filme auf Substraten durch Gasphasenabscheidung des Metalls aus metallorganischen Verbindungen, dadurch gekennzeichnet, daß als metallorganische Verbindungen die Verbindungen der Formel I

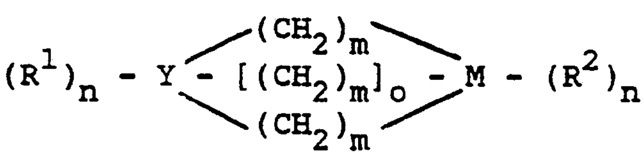

I

worin $R^1$, $R^2$, Y, M, m, n und o die in Anspruch 1 angegebenen Bedeutungen haben, eingesetzt werden.

5. Verfahren nach Anspruch 4, dadurch gekennzeichnet, daß man zur Herstellung von Verbindungshalbleitern während des Abscheidungsprozesses eine oder mehrere unter den angewandten Reaktionsbedingungen gasförmige Verbindungen des Arsens, Antimons oder Phosphors zuführt.

6. Verfahren nach Anspruch 4, dadurch gekennzeichnet, daß man zusätzlich zu den metallorganischen Verbindungen der Formel I während des Abscheidungsprozesses Dotierstoffe zusetzt.

## Claims

1. An organometallic compound of the formula I

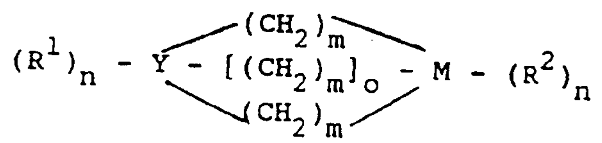

I

in which

| | |
|---|---|
| $R^1$ and $R^2$ | independently of one another are each H, a straight-chain or branched alkyl group having up to 7 C atoms, which can be partially or completely fluorinated, a cycloalkyl, alkenyl or cycloalkenyl group having each 3-8 C atoms or an unsubstituted or substituted phenyl group, |
| M | is Al, In or Ga, |
| Y | is N, P, As or Sb, |
| m | is 2, 3 or 4, |
| n and o | are each 0 or 1 |
| and | |
| n + o | is 1. |

2. The use of an organometallic compound of the formula I as claimed in claim 1 for the gas phase deposition of the metal on substrates.

3. The use of an organometallic compound of the formula I as claimed in claim 1 for the decomposition of epitaxial layers.

4. A process for the preparation of thin films on substrates by gas phase decomposition of the metal from organometallic compounds, wherein the organometallic compound used is a compound of the formula I

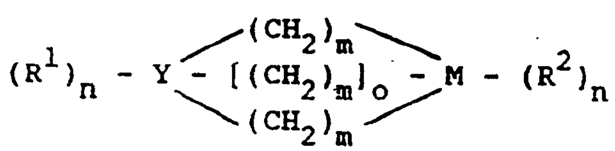

I

in which $R^1$, $R^2$, Y, M, m, n and o have the meanings given in claim 1.

5. The process as claimed in claim 4, wherein for the preparation of compound semiconductors one or more compounds of arsenic, antimony or phosphorus which are gaseous under the reaction conditions used are added during the deposition process.

6. The process as claimed in claim 4, wherein in addition to the organometallic compounds of the formula I doping substances are added during the deposition process.

## Revendications

1. Composés organométalliques de formule I :

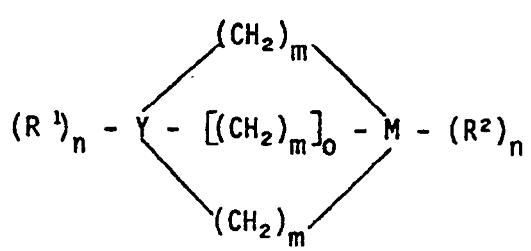

(I)

dans laquelle :

$R^1$ et $R^2$ représentent chacun, indépendamment l'un de l'autre H, un groupe alkyle à chaîne droite ou ramifiée contenant jusqu'à 7 atomes de carbone et qui peut être fluoré en partie ou en totalité, un groupe cycloalkyle, alcényle ou cycloalcényle contenant chacun 3 à 8 atomes de carbone ou un groupe phényle,

M représente Al, In ou Ga,

Y représente N, P, As ou Sb,

m est égal à 2, 3, ou 4,

n et o sont chacun égaux à 0 ou 1, et

n + o = 1.

2. Utilisation des composés organométalliques de formule I de la revendication 1 pour la déposition en phase gazeuse du métal sur des supports.

3. Utilisation des composés organométalliques de formule I de la revendication 1 pour la déposition de couches épitactiques.

4. Procédé pour l'application de pellicules minces sur des supports par déposition en phase gazeuse du métal de composés organométalliques, caractérisé en ce que l'on utilise en tant que composés organométalliques les composés de formule I :

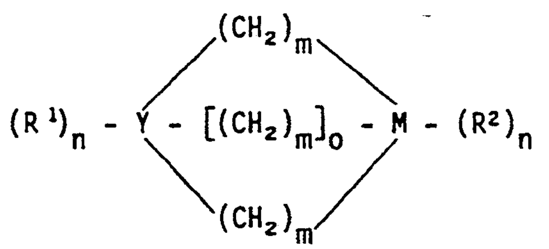

(I)

dans laquelle $R^1$, $R^2$, Y, M, m, n et o ont les significations indiquées dans la revendication 1.

5. Procédé selon la revendication 4, caractérisé en ce que, pour la fabrication de semi-conducteurs composites, on apporte au cours de l'opération de déposition un ou plusieurs composés de l'arsenic, de l'antimoine ou du phosphore, gazeux dans les conditions de réaction observées.

6. Procédé selon la revendication 4, caractérisé en ce que, en plus des composés organométalliques de formule I, on introduit des substances dopantes au cours de l'opération de déposition.